# EUROPEAN PATENT SPECIFICATION

(11) **EP 0 967 366 B1**
(45) Date of publication and mention of the grant of the patent: **15.10.2003**
(21) Application number: 99202016.4
(22) Date of filing: 21.06.1999
(51) Int. Cl.: F01K 23/10

(54) **Combined heat and power plant, and method for its operation**
Kraft-Wärme-Kopplungsanlage und Verfahren zu seinem Betrieb
Installation pour la production couplée de chaleur et d'électricité et méthode pour son opération

(30) Priority: 22.06.1998 NL 1009467
(43) Date of publication of application: 29.12.1999
(73) Proprietor: NEM B.V., 2321 JW Leiden (NL)
(72) Inventor: Linnemeyer, Mathias Jacobus Johannes, 7622 CK Borne (NL)
(74) Representative: Radünz, Ingo, Dipl.-Ing.

(56) References cited:
- DE-A- 4 319 732
- DE-B- 2 609 522
- DE-C- 4 434 526

## Description

The invention relates to a combined heat and power plant, comprising: an internal combustion turbine; a steam boiler; a main line which connects an outlet of the internal combustion turbine to an inlet of the boiler, for discharging gases from the internal combustion turbine to the boiler; a main line valve, accommodated in the main line, for opening and closing the latter in a controllable manner; an air supply line which opens out into the main line downstream of the main line valve, and in which a fan for supplying combustion air to the main line is accommodated; an air supply line valve, accommodated in the air supply line downstream of the fan, for opening and closing the air supply line in a controllable manner; a burner accommodated in the main line downstream of the air supply line and a line conducting the gases from the internal combustion turbine into the atmosphere, which line is fitted between the internal combustion turbine and the main line valve and in which a valve is accommodated for opening and closing the line in a controllable manner. The invention also relates to a method for operating such a combined heat and power plant.

A combined heat and power plant generally comprises an internal combustion turbine connected to an electric generator. Instead of an internal combustion turbine, another internal combustion engine, such as a piston engine, can also be used. Where an internal combustion turbine is mentioned in this document, this term also includes any other internal combustion engine.

In a very simple embodiment, in which the main line valve, the fan, the air supply line, the air supply line valve and the burner are absent, the flue gases from the internal combustion turbine are discharged directly by way of a main line to a steam boiler, below simply called a boiler. The main line per se can comprise several parallel lines. In this arrangement the internal combustion turbine and the boiler can only be in operation simultaneously.

If the public electric power supply is unreliable, it is desirable also to be able to have the internal combustion turbine in operation separately, with the boiler out of operation. For this purpose, in the arrangement according to the previous paragraph the main line between the internal combustion turbine and the boiler is provided with a branch line which discharges the flue gases into the atmosphere and which can process the maximum output of flue gases and can be shut off and opened by means of a branch line valve. In addition to this, a main line valve is accommodated in the main line, downstream of the branch line, for opening and closing of the main line. In practice, the branch line valve and the main line valve can be combined to form one change-over valve, which shuts off the main line when the branch line is opened and shuts off the branch line when the main line is opened. This means that the internal combustion turbine can either be operated in isolation or in parallel with the boiler, with free discharge of the flue gases being ensured in both operating situations ( see DE-B-2 609 522).

If high standards are set for the reliability and the availability of the combined heat and power plant, in particular the availability of its heat supply, it must be ensured that the boiler can remain in operation despite the fact that the internal combustion turbine may break down, preferably without a significant change in the supply of heat to the boiler. For this purpose, the plant supplied with a branch line has a burner and a fan added to it. The burner is accommodated in the main line between the branch line and the boiler, while the fan can introduce combustion air into the main line at a point between the main line valve and the burner, by way of an air supply line in which a valve is accommodated. If the internal combustion turbine is not available or breaks down, the combination of the burner and the fan supplies the necessary hot flue gases to keep the boiler in operation.

In order to minimize disruptions in the steam supply by the steam boiler as far as possible during a "flying" takeover (= during operation) by the burner from the internal combustion turbine, the valve in the branch line must be controllable, in addition to a change-over valve possibly also being present. This change-over valve can also be replaced by a controllable main line valve. Since in such a circuit it must be prevented in all circumstances that the flue gases coming from the internal combustion turbine are blocked when both the branch line valve and the main line valve are closed, the branch line valve is provided with an emergency opening function, which goes into operation when a certain pressure downstream of the internal combustion turbine is exceeded.

The circuit described in the previous paragraph makes isolated operation of the internal combustion turbine or isolated operation of the boiler possible, and also parallel operation of the internal combustion turbine and the boiler. Even if isolated operation of the internal combustion turbine is not necessary, when a change-over is made from parallel operation of the internal combustion turbine and the boiler to isolated operation of the boiler, the branch line is necessary for replacing the flue gas stream from the internal combustion turbine to the boiler in a controlled manner by the flue gas stream from the burner. The branch line is also necessary when a change-over is made from isolated operation of the boiler to parallel operation of the internal combustion turbine and the boiler, in the case of which the flue gas stream from the burner to the boiler is replaced in a controlled manner by the flue gas stream from the internal combustion turbine. Moreover, the branch line is necessary for running down and cooling off the internal combustion turbine after it has been separated from the boiler.

A disadvantage of the use of a branch line is that the valve(s) with its/their seal(s) start(s) to leak, which in the case of parallel operation of the internal combustion turbine and the boiler leads to loss of efficiency which increases exponentially with increasing size of the valves used.

If isolated operation of the internal combustion turbine is not necessary, a branch line with valve(s) is still necessary for putting the internal combustion turbine and the burner into and out of operation in a controlled manner and for running down the internal combustion turbine after it has been separated from the boiler. However, incorporating the branch line and all the ancillary facilities requires considerable capital investment.

Another disadvantage of the combined heat and power plant according to the prior art is that for safe operation it requires complicated control, regulation and protection.

The object of the invention is to provide a combined heat and power plant which has greatly reduced leakage losses, is considerably cheaper, and the regulation, control and protection of which can be achieved in a considerably simpler way.

To that end, the combined heat and power plant according to the invention is characterized in that the line conducting the gases into the atmosphere is designed as a blow-off line with a blow-off line valve, whereby the blow-off line being adapted to discharge at most the gas output generated by the internal combustion turbine at a blow-off rotational speed which is lower than the nominal rotational speed. In particular, the blow-off rotational speed is substantially equal to the starting rotational speed at which the internal combustion turbine is started up. For an internal combustion turbine, this starting rotational speed is lower than about one thousand revolutions per minute, in particular between about five hundred and eight hundred revolutions per minute.

In the combined heat and power plant according to the invention, the branch line with a branch line valve customary in the prior art has been dispensed both of which having to be designed for the discharge of the flue gas stream from the internal combustion engine when the latter is under full load. According to the invention it is provided that the above mentioned blow-off line and the above mentioned blow-off line valve need only to be designed for the discharge of the gas stream from the internal combustion turbine at its (relatively low) blow-off rotational speed, which gas stream consists mainly of air and possibly combustible residual gas components to be vented out, and not of hot flue gases. The invention is partly based on the insight that the hot flue gases from the internal combustion engine can be discharged by way of the main line and the steam boiler during all operational processes and in all operational states of the plant. When the internal combustion engine has been started up and therefore fires and produces flue gases, the blow-off line valve is fully closed and the main line valve is open. For example, when the internal combustion engine is being put into planned operation, its outlet is already connected to the inlet of the steam boiler, the blow-off line valve is already fully closed and the main line valve is already opened before the internal combustion engine is started up. The hot flue gases in that case and also in other operating states need not be discharged through the blow-off line.

The blow-off line between the internal combustion engine and the main line valve is the line descending from the main line with the highest gas throughput capacity, higher than that of any other descending line. The blow-off line can be produced cheaply, owing to the relatively low standards which it has to meet.

In the combined heat and power plant according to the invention, isolated operation of the internal combustion engine is not possible, but this is not required in many applications anyway, for example when a reliable public electric power supply is available, or when the continuity of the electric energy supplied by the internal combustion engine is not critical. The control, regulation and protection can consequently be provided in a simpler and cheaper form. The main line valve does have emergency opening means provided, in order to protect the internal combustion engine.

In a preferred embodiment, the characteristic of the fan is selected in such a way that the output of the fan falls when there is an increase in pressure at the delivery side of the fan.

The invention is explained in greater detail below with reference to the appended drawing, in which:
Fig. 1 shows diagrammatically a circuit of a combined heat and power plant according to the prior art; and
Fig. 2 shows diagrammatically a circuit of a combined heat and power plant according to the invention.

In the different figures, identical reference numerals relate to identical parts or parts with an identical function.

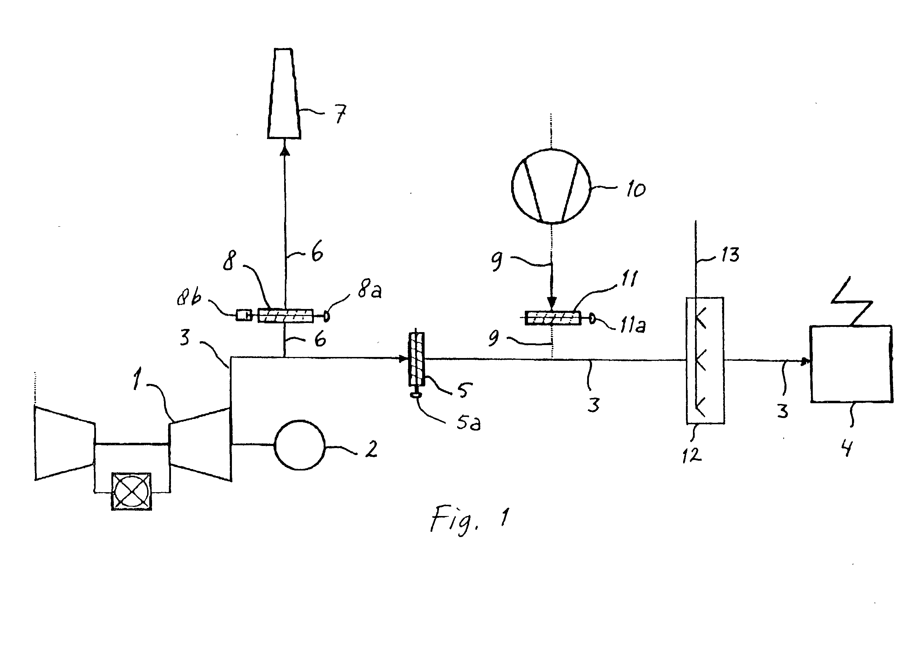

Fig. 1 shows a conventional combined heat and power plant with an internal combustion turbine 1, which is connected to an electric generator 2 for generating electric energy. Flue gases coming from the internal combustion turbine 1 are discharged through a main line 3 to a steam boiler 4. A regulable main line valve 5, which can shut off the main line 3 fully or partially to an extent to be predetermined (by means of a regulating mechanism 5a), is accommodated in the main line 3.

A branch line 6 is fitted between the internal combustion turbine 1 and the main line valve 5, which branch line leads to a stack 7, which discharges the spent gases into the atmosphere (also known as an emergency stack or bypass stack). Such a stack 7 normally has a diameter of several metres, generally three to four metres, and represents a considerable capital investment. A regulable branch line valve 8 is accommodated in the branch line 6, which valve can fully or partially shut off the branch line 6 to an extent to be predetermined (by means of a regulating mechanism 8a), in coordination with the position of the main line valve 5. The branch line valve 8 is provided with emergency opening means 8b which react to the pressure in the main line 3 between the internal combustion turbine 1 and the main line valve 5 rising above a certain value, by opening the branch line valve 8. In the designing of combined heat and power plants with a main line valve 5 according to the prior art, it has always been assumed that the emergency opening means 8b has to be capable of discharging the full exhaust capacity of the internal combustion turbine 1 directly to the atmosphere.

An air supply line 9, which opens out into the main line 3 is installed between the main line valve 5 and the boiler 4, by way of which air supply line combustion air can be forced by means of a fan 10 into the main line 3. A regulable air supply line valve 11, which can fully or partially shut off the air supply line 9 to an extent to be predetermined (by means of a regulating mechanism 11a), in coordination with the position of the main line valve 5, is accommodated in the air supply line 9.

An auxiliary burner 12 is accommodated in the main line 3 between the air supply line 9 and the boiler 4. The auxiliary burner 12 receives fuel by way of a line 13.

For starting up of the internal combustion turbine 1 in isolated operation, the branch line valve 8 is opened and the main line valve 5 is closed, and this state is maintained while the internal combustion turbine 1 is being brought up to the desired load and during normal operation thereafter.

For starting up of the internal combustion turbine 1 in parallel operation of the internal combustion turbine 1 and the boiler 4, the branch line valve 8 is opened and the main line valve 5 is closed, or vice versa. The internal combustion turbine 1 is put into operation up to a minimum electric load of a few per cent. If the internal combustion turbine is started up on the branch line 6, the main line valve 5 is then opened and the branch line valve 8 is closed. The boiler 4 can now be put into operation, after which the internal combustion turbine 1 is brought up to the desired load. The load of the boiler 4 follows the load of the internal combustion turbine 1.

When stopping the plant when the internal combustion turbine 1 and the boiler 4 are in parallel operation, the internal combustion turbine 1 is brought down to a minimum load, after which it is put out of operation. The boiler 4 is then put out of operation. In this case also, the load of the boiler 4 follows the load of the internal combustion turbine 1.

If the internal combustion turbine 1 and the boiler 4 are both in operation and the internal combustion turbine 1 unexpectedly breaks down, it will run down through its mass inertia. The output and the temperature of the gases coming from the internal combustion turbine 1 fall in the process. In order to minimize the disruption to the steam production of the boiler 4, a change-over is made to the auxiliary burner 12. For this purpose, the following occurs in a predetermined manner:
- the fan 10 is put into operation;
- the air supply line valve 11 is opened;
- the main line valve 5 is closed; and
- the auxiliary burner 12 is put into operation and brought up to load.

If the internal combustion turbine 1 and the boiler 4 are both in operation and the internal combustion turbine 1 is put out of operation in a planned manner without putting the boiler 4 out of operation, the following occurs in a predetermined manner:
- the fan 10 is put into operation;
- the air supply line valve 11 is opened;
- the main line valve 5 is closed on the basis of a regulation which keeps the pressure upstream of the boiler 4 constant;
- the branch line valve 8 is opened on the basis of a regulation which keeps the pressure in the main line upstream of the main line valve 5 constant; and
- the internal combustion turbine 1 is put out of operation.

If the auxiliary burner 12 and the boiler 4 are in operation, and the internal combustion turbine 1 is put into operation in a planned manner to take over the operation of the auxiliary burner 12, the following occurs in a predetermined manner:
- the internal combustion turbine 1 is put into operation in the manner described earlier, by way of the branch line 6, the branch line valve 8 being opened and the main line valve 5 being closed;
- the branch line valve 8 is closed to such an extent that there is no longer any pressure difference across the main line valve 5;
- the air supply line valve 11 is closed in a predetermined manner;
- the main line valve 5 is opened on the basis of a regulation which keeps the pressure in the main line 3 upstream of the boiler 4 constant;
- the branch line valve 8 is closed further on the basis of a regulation which keeps the pressure in the main line 3 upstream of the main line valve 5 constant; and
- the fan 10 is put out of operation.

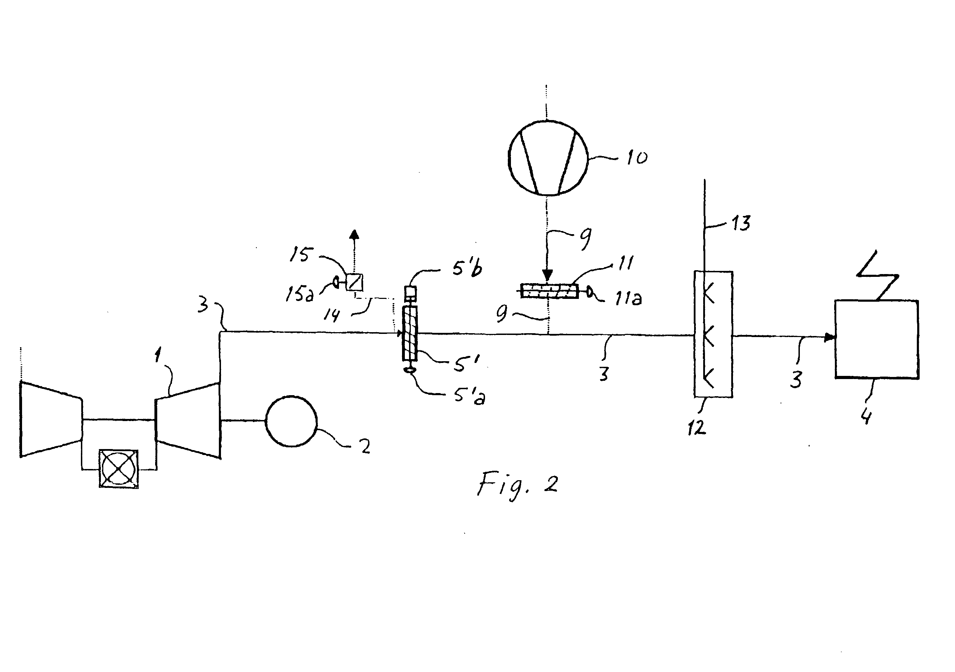

Fig. 2 shows a combined heat and power plant according to the invention, with the internal combustion turbine 1 connected to the electric generator 2. Flue gases coming from the internal combustion turbine 1 are discharged through the main line 3 to the steam boiler 4. The regulable main line valve 5' is accommodated in the main line 3, which valve can fully or partially shut off the main line 3 to an extent to be predetermined (by means of a regulating mechanism 5'a). The main line valve 5' is provided with emergency opening means 5'b, which react by opening the main line valve 5' when the pressure in the main line 3 between the internal combustion turbine 1 and the main line valve 5' rises above a certain value. It has been found that the emergency opening means 5'b, which discharge flue gases through the steam boiler 4, ensure safe operation of the combined heat and power plant and permit reliable and efficient operation of the plant (in particular also (isolated) operation of the steam boiler 4).

The air supply line 9, which opens out into the main line 3, is installed between the main line valve 5' and the boiler 4, by way of which air supply line combustion air can be forced into the main line 3 by means of the fan 10. The regulable air supply line valve 11 is accommodated in the air supply line 9, which valve can fully or partially shut off the air supply line 9 to an extent to be predetermined (by means of a regulating mechanism 11a), in coordination with the opening position of the main line valve 5'.

The auxiliary burner 12 is accommodated in the main line 3 between the air supply line 9 and the boiler 4. The auxiliary burner 12 receives fuel by way of the line 13.

Between the internal combustion turbine 1 and the main line valve 5', the main line 3 is provided with a blow-off line 14, in which a regulable blow-off line valve 15 is accommodated, which valve can fully or partially shut off the blow-off line to an extent to be predetermined (by means of a regulating mechanism 15a).

When the plant according to Fig. 2 is compared with the plant according to Fig. 1, it is immediately clear that in Fig. 2 a branch line and a branch line valve are absent and have been replaced by a blow-off line 14 with a blow-off line valve 15. The blow-off line 14 has a considerably lower capacity than the branch line 6 according to Fig. 1, and the blow-off line valve 15 is considerably smaller and simpler than the branch line valve 8 according to Fig. 1. The capacity of the blow-off line 14 is approx. 15 to 20 per cent of the capacity of the main line 3. This capacity is sufficient for blowing off the gas output, which is blown off at higher blow-off rotational speeds (up to approx. 1000 revolutions per minute) by the internal combustion turbine by way of the main line 3. The blow-off line 14 need not be suitable for discharging flue gases from the internal combustion turbine 1, since these flue gases can be discharged by way of the main line 3 through the steam boiler 4.

In the circuit according to Fig. 2, isolated operation of the internal combustion turbine 1 is not possible, since the blow-off line 14 is unsuitable for discharging the flue gases of the internal combustion turbine 1.

For starting up the internal combustion turbine 1 in parallel operation of the internal combustion turbine 1 and the boiler 4, the main line valve 5' is opened. The internal combustion turbine 1 is first put into operation up to a minimum electric load of a few per cent. The boiler 4 is then put into operation, after which the internal combustion turbine 1 is brought up to the desired load. The load of the boiler 4 follows the load of the internal combustion turbine 1.

For stopping the plant in parallel operation of the internal combustion turbine 1 and the boiler 4, the internal combustion turbine 1 is brought down to a minimum load, after which the internal combustion turbine is put out of operation. The boiler 4 is subsequently put out of operation. In this case also, the load of the boiler 4 follows the load of the internal combustion turbine 1.

If both the internal combustion turbine 1 and the boiler 4 are in operation and the internal combustion turbine 1 unexpectedly breaks down (the internal combustion turbine trips), the latter will run down through its mass inertia. In order to minimize the disruption to the steam production of the boiler 4, a change-over is made to the auxiliary burner 12. For this purpose, the following occurs in a predetermined manner:
- the fan 10 is put into operation;
- the air supply line valve 11 is opened when the fan 10 supplies sufficient pressure, the fan 10 supplying an air stream in accordance with its capacity curve, depending on the counterpressure from the boiler 4, and the air output automatically increasing further as the output of the gases coming from the internal combustion turbine 1 falls;
- the blow-off line 15 is opened and the main line valve 5' closed when the rotational speed of the internal combustion turbine 1 has become lower than the blow-off rotational speed; and
- the auxiliary burner 12 is put into operation at low capacity (if it was not already in operation) and is brought up to capacity.

The internal combustion turbine 1 now runs down further by way of the blow-off line 14.

If the internal combustion turbine 1 and the boiler 4 are both in operation and the internal combustion turbine 1 is put out of operation in a planned manner without putting the boiler 4 out of operation, the following occurs in a predetermined manner:
- the fan 10 is put into operation;
- the air supply line valve 11 is opened when the fan 10 supplies sufficient pressure, the fan design being such that the fan can supply a minimum quantity of air at full counterpressure from the boiler 4;
- the auxiliary burner 12 is put into operation at low capacity (if it was not already in operation);
- the internal combustion turbine 1 is brought down to a minimum load;
- the internal combustion turbine 1 is put out of operation, after which it runs down further to the boiler 4;
- the blow-off line valve 15 is opened and the main line valve 5' closed when the rotational speed of the internal combustion turbine 1 has become lower than the blow-off rotational speed;
- the auxiliary burner 12 is brought up to load; and
- the internal combustion turbine 1 is enabled to run down completely by way of the blow-off line 14.

If the fan 10, the auxiliary burner 12 and the boiler 4 are in operation and the fan 10 is put out of operation in a planned manner, and the internal combustion turbine 1 is put into operation in a planned manner, without the boiler 4 being put out of operation, the following occurs in a predetermined manner:
- with the main line valve 5' closed and the blow-off line valve 15 open, the internal combustion turbine 1 is brought by means of a starting motor to a starting rotational speed of approximately 500-800 revolutions per minute, the internal combustion turbine 1 being vented in order to discharge any combustible components which might still be present in it;
- the blow-off line valve 15 is partially closed in order to make the pressures upstream and downstream of the main line valve 5' substantially equal to each other;
- the main line valve 5' is opened;
- the blow-off line valve 15 is closed, both the fan 10 and the internal combustion turbine 1 conveying air to the auxiliary burner 12, which produces an automatic decrease in the air output supplied by the fan 10 in accordance with its characteristic, with the result that the total gas flow through the boiler 4 and the pressure at the inlet of the boiler 4 increase only slightly;
- the internal combustion turbine 1 is started up further, the combustion being started so that the internal combustion turbine subsequently fires and produces flue gases, and so that both the gas stream generated by the internal combustion turbine 1 and its temperature increase;
- the supply of fuel to the auxiliary burner 12 is reduced, the air output supplied by the fan 10 automatically decreasing when the output of the gases coming from the internal combustion turbine 1 increases;
- the air supply line valve 11 is closed;
- the fan 10 is put out of operation; and
- the auxiliary burner 12 is brought back to a low capacity and, if desired, put out of operation.

## Claims

1. Combined heat and power plant, comprising:
- an internal combustion turbine (1);
- a steam boiler (4);
- a main line (3) which connects an outlet of the internal combustion turbine (1) to an inlet of the boiler (4), for discharging gases from the internal combustion turbine (1) to the boiler (4);
- a main line valve (5), accommodated in the main line (3); for opening and closing the latter in a controllable manner;
- an air supply line (9) which opens out into the main line (3) downstream of the main line valve (5) and in which a fan (10) for supplying combustion air to the main line (3) is accommodated;
- an air supply line valve (11), accommodated in the air supply line (9) downstream of the fan (10), for opening and closing the air supply line (9) in a controllable manner;
- a burner (12) accommodated in the main line (3) downstream of the air supply line (9); and a line (14) conducting the gases from the internal combustion turbine (1) into the atmosphere, which line (14) is fitted between the internal combustion turbine (1) and the main line valve (5) and in which a valve (15) is accommodated for opening and closing the line (14) in a controllable manner,
**characterized in that** the line is designed as a blow-off line (14) with a blow-off line valve (15), whereby the blow-off line (14) being adapted to discharge at most the gas output generated by the internal combustion turbine (1) at a blow-off rotational speed which is lower than the nominal rotational speed.

2. Combined heat and power plant according to claim 1, **characterized in that** the blow-off rotational speed is substantially equal to the starting rotational speed at which the internal combustion turbine is started.

3. Combined heat and power plant according to claim 1 or 2, **characterized in that** the blow-off line (14) between the internal combustion turbine (1) and the main line valve (5') is the line descending from the main line (3) with the highest gas throughput capacity, higher than that of any other descending line.

4. Combined heat and power plant according to any of claims 1-3, **characterized in that** the main line valve (5') is provided with emergency opening means (5'b).

5. Combined heat and power plant according to any of claims 1-4, **characterized in that** the characteristic of the fan (10) is selected in such a way that the output of the fan (10) falls when there is an increase in pressure at the delivery side of the fan (10).

6. Combined heat and power plant according to claim 5, **characterized in that** the blow-off rotational speed is lower than about a thousand revolutions per minute.

7. Combined heat and power plant according to claim 6, **characterized in that** the blow-off rotational speed lies between about five hundred and eight hundred revolutions per minute.

8. Method for operating the combined heat and power plant according to any of claims 1-7, **characterized in that** during the operation of the internal combustion turbine (1) and the boiler (4) and subsequent unexpected breakdown of the internal combustion turbine (1) the following steps are carried out:
- the fan (10) is put into operation;
- the air supply line valve (11) is opened when the fan (10) supplies sufficient pressure, the fan (10) supplying an air stream in accordance with its capacity curve, depending on the counterpressure from the boiler (4), and the air output automatically increasing further as the output of the gases coming from the internal combustion turbine (1) falls;
- the blow-off line valve (15) is opened and the main 35 line valve (5') closed when the rotational speed of the internal combustion turbine (1) has become lower than the blow-off rotational speed;
- if the burner (12) is not yet in operation, it is put into operation at low capacity; and
- the burner (12) is brought up to load.

9. Method for operating the combined heat and power plant according to any of claims 1-8, **characterized in that** during operation of the internal combustion turbine (1) and the boiler (4) and subsequent putting out of operation of the internal combustion turbine (1) and putting into operation of the burner (12) in a planned manner, the following steps are carried out:
- the fan (10) is put into operation;
- the air supply line valve (11) is opened when the fan (10) supplies sufficient pressure, the fan design being such that the fan can supply a minimum quantity of air at full counterpressure from the boiler (4);
- the internal combustion turbine (1) is brought down to a minimum load;
- the internal combustion turbine (1) is put out of operation, after which it runs down further to the boiler (4);
- the blow-off line valve (15) is opened and the main line valve (5') is closed when the rotational speed of the internal combustion turbine (1) has become lower than the blow-off rotational speed;
- if the burner (12) is not yet in operation, it is put into operation at low capacity;
- the burner (12) is brought up to load; and
- the internal combustion turbine (1) is enabled to run down completely by way of the blow-off line (14).

10. Method for operating the combined heat and power plant according to any of claims 1-9, **characterized in that** during operation of the fan (10), the burner (12) and the boiler (4) and subsequent putting out of operation of the fan (10) and putting into operation of the internal combustion turbine (1) in a planned manner, the following steps are carried out:
- with the main line valve (5') closed and the blow-off line valve (15) open, the internal combustion turbine (1) is brought by means of a starting motor to a starting rotational speed, the internal combustion turbine (1) being ventilated;
- the blow-off line valve (15) is partially closed in order to make the pressures upstream and downstream of the main line valve (5') substantially equal to each other;
- the main line valve (5)' is opened;
- the blow-off line (15) is closed, both the fan (10) and the internal combustion turbine (1) supplying air to the burner (12);
- the internal combustion turbine (1) is started up further;
- the supply of fuel to the burner (12) is reduced and the air output supplied by the fan (10) automatically decreases as the output of the gases coming from the internal combustion turbine (1) increases;
- the air supply line valve (11) is closed;
- the fan (10) is put out of operation;
- the burner (12) is brought to a low capacity; and
- if desired, the burner (12) is put out of operation.

## Patentansprüche

1. Blockheizkraftwerk umfassend:
- eine Gasturbine (1),
- einen Dampfkessel (4),
- eine Hauptleitung (3), die den Ausgang der Gasturbine (1) mit einem Eingang des Kessels (4) verbindet, um die Gase aus der Gasturbine (1) in den Kessel (4) abzuführen,
- ein Hauptleitungsventil (5), das in der Hauptleitung (3) angeordnet ist, um letzteres regelbar zu öffnen und zu schließen,
- eine Luftzufuhrleitung (9), die sich in die Hauptleitung (3) unterhalb des Hauptleitungsventils (5) öffnet und in der ein Lüfter (10) für die Zufuhr von Verbrennungsluft in die Hauptleitung (3) angeordnet ist,
- ein Luftzufuhrleitungsventil (11), das in der Luftzufuhrleitung (9) unterhalb des Lüfters (10) angeordnet ist, um die Luftzufuhrleitung (9) regelbar zu öffnen und zu schließen,
- einen Brenner (12), der in der Hauptleitung (3) unterhalb der Luftzufuhrleitung (9) angeordnet ist, und
- eine Leitung (14), die die Gase aus der Gasturbine (1) in die Atmosphäre leitet, wobei die Leitung (14) zwischen der Gasturbine (1) und dem Hauptleitungsventil (5) angeordnet ist, und in der ein Ventil (15) angeordnet ist, um die Leitung (14) regelbar zu öffnen und zu schließen,
**dadurch gekennzeichnet, dass** die Leitung als eine Abblasleitung (14) mit einem Abblasleitungsventil (15) ausgebildet ist, wobei die Abblasleitung (14) geeignet ist, den Gasaustrag, der von der Gasturbine (1) erzeugt wird, höchstens mit einer Abblasdrehzahl abzuführen, die niedriger ist als die Nominaldrehzahl.

2. Blockheizkraftwerk nach Anspruch 1, **dadurch gekennzeichnet, dass** die Abblasdrehzahl im Wesentlichen gleich der Anfangsdrehzahl ist, mit der die Gasturbine anläuft.

3. Blockheizkraftwerk nach Anspruch 1 oder 2, **dadurch gekennzeichnet, dass** die Abblasleitung (14) zwischen der Gasturbine (1) und dem Hauptleitungsventil (5') die Leitung ist, die von der Hauptleitung (3) mit der höchsten Gasdurchsatzleistung absteigt, die höher ist als die jeder anderen absteigenden Leitung.

4. Blockheizkraftwerk nach einem der Ansprüche 1 bis 3, **dadurch gekennzeichnet, dass** das Hauptleitungsventil (5') mit Notöffnungsmitteln (5'b) versehen ist.

5. Blockheizkraftwerk nach einem der Ansprüche 1 bis 4, **dadurch gekennzeichnet, dass** die Kennlinie des Lüfters (10) so ausgewählt wird, dass der Austrag des Lüfters (10) abfällt, wenn der Druck an der Förderseite des Lüfters (10) ansteigt.

6. Blockheizkraftwerk nach Anspruch 5, **dadurch gekennzeichnet, dass** die Abblasdrehzahl unter etwa tausend Umdrehungen in der Minute liegt.

7. Blockheizkraftwerk nach Anspruch 6, **dadurch gekennzeichnet, dass** die Abblasdrehzahl zwischen etwa fünfhundert und achthundert Umdrehungen in der Minute beträgt.

8. Verfahren zum Betreiben eines Blockheizkraftwerks nach einem der Ansprüche 1 bis 7, **dadurch gekennzeichnet, dass** während des Betriebs der Gasturbine (1) und des Kessels (4) und nach einem unerwarteten Ausfall der Gasturbine (1) die folgenden Schritte ablaufen:
- der Lüfter (10) wird eingeschaltet,
- das Luftzufuhrleitungsventil (11) wird geöffnet, wenn der Lüfter (10) einen ausreichenden Druck zuführt, wobei der Lüfter (10) einen Luftstrom entsprechend seiner Leistungskurve abhängig von dem Gegendruck von dem Kessel (4) zuführt und der Luftaustrag automatisch weiter in dem Maß ansteigt, in dem der Gasaustrag aus der Gasturbine 1 sinkt,
- die Abblasleitung (15) wird geöffnet und das Hauptleitungsventil (5') geschlossen, wenn die Drehzahl der Gasturbine (1) unter die Abblasdrehzahl gesunken ist,
- wenn der Brenner (12) noch nicht eingeschaltet ist, wird er mit geringer Leistung eingeschaltet, und
- der Brenner (12) wird auf seine Belastung hochgefahren.

9. Verfahren zum Betreiben eines Blockheizkraftwerks nach einem der Ansprüche 1 bis 8, **dadurch gekennzeichnet, dass** während des Betriebs der Gasturbine (1) und des Kessels (4) und nach dem geplanten Abschalten der Gasturbine (1) und Einschalten des Brenners (12) die folgenden Schritte ablaufen:
- der Lüfter (10) wird eingeschaltet,
- das Luftzufuhrleitungsventil (11) wird geöffnet, wenn der Lüfter (10) einen ausreichenden Druck zuführt, wobei der Lüfter so ausgelegt ist, dass der Lüfter eine Mindestmenge Luft bei vollem Gegendruck von dem Kessel (4) zuführen kann,
- die Gasturbine (1) wird auf eine Mindestleistung heruntergefahren,
- die Gasturbine (1) wird abgeschaltet, wonach sie weiter zum Kessel (4) herunter läuft,
- das Abblasleitungsventil (15) wird geöffnet und das Hauptleitungsventil (5') geschlossen, wenn die Drehzahl der Gasturbine (1) unter die Abblasdrehzahl gesunken ist,
- wenn der Brenner (12) nicht bereits eingeschaltet ist, wird er mit niedriger Leistung eingeschaltet,
- der Brenner (12) wird hochgefahren, und
- die Gasturbine (1) wird in die Lage versetzt, vollständig über die Abblasleitung (14) ganz herunter zu fahren.

10. Verfahren zum Betreiben eines Blockheizkraftwerks nach einem der Ansprüche 1 bis 9, **dadurch gekennzeichnet, dass** beim Betrieb des Lüfters (10), des Brenners (12) und des Kessels (4) und anschließend an das geplante Abschalten des Lüfters (10) und Einschalten der Gasturbine (1) die folgenden Schritte ablaufen:
- bei geschlossenem Hauptleitungsventil (5') und offenem Abblasleitungsventil (15) wird die Gasturbine (1) mit einen Startermotor auf die Anfangsdrehzahl gebracht, wobei die Gasturbine (1) entlüftet wird,
- das Abblasleitungsventil (15) wird teilweise geschlossen, um die Drücke oberhalb und unterhalb des Hauptleitungsventils (5') im Wesentlichen einander anzugleichen,
- das Hauptleitungsventil (5') wird geöffnet,
- die Abblasleitung (15) wird geschlossen, wobei sowohl der Lüfter (10) als auch die Gasturbine (1) Luft zum Brenner (12) befördern,
- die Gasturbine (1) läuft weiter an,
- die Zufuhr von Brennstoff zum Brenner (12) wird reduziert und der Luftaustrag, der durch den Lüfter (10) zugeführt wird, geht automatisch herunter, wenn der Gasaustrag aus der Gasturbine (1) zunimmt,
- das Luftzufuhrleitungsventil (11) wird geschlossen,
- der Lüfter (10) wird abgeschaltet,
- der Brenner (12) wird auf eine geringe Leistung gebracht, und
der Brenner (12) wird gegebenenfalls abgeschaltet.

## Revendications

1. Centrale mixte de production de chaleur et d'énergie, comprenant :
une turbine à combustion interne (1) ;
une chaudière à vapeur (4) ;
une conduite principale (3) qui relie une sortie de la turbine à combustion interne (1) à une entrée de la chaudière (4) pour conduire des gaz de la turbine à combustion interne (1) à la chaudière (4) ;
une vanne de conduite principale (5), installée sur la conduite principale (3), pour ouvrir et fermer cette dernière de façon contrôlée ;
une conduite d'alimentation en air (9) qui débouche dans la conduite principale (3) en aval de la vanne de conduite principale (5) et dans laquelle est installé un ventilateur (10) pour fournir de l'air de combustion à la conduite principale (3) ;
une vanne de conduite d'alimentation en air (11), installée sur la conduite d'alimentation en air (9) en aval du ventilateur (10), pour ouvrir et fermer la conduite d'alimentation en air (9) de façon contrôlée ;
un brûleur (12) installé sur la conduite principale (3) en aval de la conduite d'alimentation en air (9) ; et
une conduite (14) déversant les gaz de la turbine à combustion interne (1) dans l'atmosphère, laquelle conduite (14) est insérée entre la turbine à combustion interne (1) et la vanne de conduite principale (5) et dans laquelle est installée une vanne (15) pour ouvrir et fermer la conduite (14) de façon contrôlée,
**caractérisée en ce que** la conduite est conçue comme une conduite de décharge (14) avec une vanne de conduite de décharge (15), moyennant quoi la conduite de décharge (14) est adaptée pour évacuer au maximum le débit de gaz produit par la turbine à combustion interne (1) à un régime de purge qui est inférieur au régime nominal.

2. Centrale mixte de production de chaleur et d'énergie selon la revendication 1, **caractérisée en ce que** le régime de purge est sensiblement égal au régime de démarrage auquel on démarre la turbine à combustion interne.

3. Centrale mixte de production de chaleur et d'énergie selon la revendication 1 ou 2, **caractérisée en ce que** la conduite de décharge (14) entre la turbine à combustion interne (1) et la vanne de conduite principale (5') est la conduite dérivée de la conduite principale (3) ayant le plus haut débit de gaz, supérieur à celui de toute autre conduite dérivée.

4. Centrale mixte de production de chaleur et d'énergie selon l'une des revendications 1 à 3, **caractérisée en ce que** la vanne de conduite principale (5') est pourvue de moyens d'ouverture d'urgence (5'b).

5. Centrale mixte de production de chaleur et d'énergie selon l'une des revendications 1 à 4, **caractérisée en ce que** l'on choisit les caractéristiques du ventilateur (10) de telle manière que le débit du ventilateur (10) baisse quand il y a une augmentation de pression du côté du refoulement du ventilateur (10).

6. Centrale mixte de production de chaleur et d'énergie selon la revendication 5, **caractérisée en ce que** le régime de purge est inférieur à environ un millier de tours par minute.

7. Centrale mixte de production de chaleur et d'énergie selon la revendication 6, **caractérisée en ce que** le régime de purge se situe entre environ cinq cents et huit cents tours par minute.

8. Procédé pour faire fonctionner la centrale mixte de production de chaleur et d'énergie selon l'une des revendications 1 à 7, **caractérisé en ce que** pendant le fonctionnement de la turbine à combustion interne (1) et de la chaudière (4) et une panne imprévue ultérieure de la turbine à combustion interne (1) on exécute les étapes suivantes :
on met en marche le ventilateur (10) ;
on ouvre la vanne de conduite d'alimentation en air (11) quand le ventilateur (10) fournit une pression suffisante, le ventilateur (10) fournissant un flux d'air conformément à sa courbe de capacité, en fonction de la contre-pression en provenance de la chaudière (4), et le débit d'air s'accroissant automatiquement au fur et à mesure que baisse le débit des gaz provenant de la turbine à combustion interne (1) ;
on ouvre la vanne de conduite de décharge (15) et on ferme la vanne de conduite principale (5') quand le régime de la turbine à combustion interne (1) est devenu inférieur au régime de purge ;
si le brûleur (12) ne fonctionne pas déjà, on le met en marche à faible puissance ; et
on monte le brûleur (12) à pleine puissance.

9. Procédé pour faire fonctionner la centrale mixte de production de chaleur et d'énergie selon l'une des revendications 1 à 8, **caractérisé en ce que** pendant le fonctionnement de la turbine à combustion interne (1) et de la chaudière (4) et, ultérieurement et de manière programmée, un arrêt du fonctionnement de la turbine à combustion interne (1) et une mise en marche du brûleur (12), on exécute les étapes suivantes :
on met en marche le ventilateur (10) ;
on ouvre la vanne de conduite d'alimentation en air (11) quand le ventilateur (10) fournit une pression suffisante, la conception du ventilateur étant telle que le ventilateur puisse fournir une quantité minimale d'air même quand la contre-pression en provenance de la chaudière (4) est maximale ;
on ralentit la turbine à combustion interne (1) jusqu'à une charge minimale ;
on arrête le fonctionnement de la turbine à combustion interne (1), après quoi l'arrêt s'étend jusqu'à la chaudière (4) ;
on ouvre la vanne de conduite de décharge (15) et on ferme la vanne de conduite principale (5') quand le régime de la turbine à combustion interne (1) est devenu inférieur au régime de purge ;
si le brûleur (12) ne fonctionne pas déjà, on le met en marche à faible puissance ;
on monte le brûleur (12) à pleine puissance ; et
on permet à la turbine à combustion interne (1) de s'arrêter complètement au moyen de la conduite de décharge (14).

10. Procédé pour faire fonctionner la centrale mixte de production de chaleur et d'énergie selon l'une des revendications 1 à 9, **caractérisé en ce que** pendant le fonctionnement du ventilateur (10), du brûleur (12) et de la chaudière (4) et, ultérieurement et de manière programmée, un arrêt du fonctionnement du ventilateur (10) et une mise en marche de la turbine à combustion interne (1), on exécute les étapes suivantes :
avec la vanne de conduite principale (5') fermée et la vanne de conduite de décharge (15) ouverte, on monte la turbine à combustion interne (1) jusqu'à son régime de démarrage au moyen d'un moteur de démarrage, la turbine à combustion interne (1) étant ventilée ;
on ferme partiellement la vanne de conduite de décharge (15) de façon à rendre les pressions en amont et en aval de la vanne de conduite principale (5') sensiblement égales entre elles ;
on ouvre la vanne de conduite principale (5') ;
on ferme la vanne de conduite de décharge (15), le ventilateur (10) et la turbine à combustion interne (1) fournissant tous les deux de l'air au brûleur (12) ;
on poursuit le démarrage de la turbine à combustion interne (1) ;
on réduit l'alimentation en carburant du brûleur (12) et le débit d'air fourni par le ventilateur (10) décroît automatiquement au fur et à mesure que croît le débit des gaz provenant de la turbine à combustion interne (1) ;
on ferme la vanne de conduite d'alimentation en air (11) ;
on arrête le fonctionnement du ventilateur (10) ;
on met le brûleur (12) à faible puissance ; et
si on le souhaite, on arrête le fonctionnement du brûleur (12).
